# EUROPÄISCHE PATENTSCHRIFT

(11) **EP 2 530 339 B1**
(45) Veröffentlichungstag und Bekanntmachung des Hinweises auf die Patenterteilung: **28.06.2017**
(21) Anmeldenummer: 12170361.5
(22) Anmeldetag: 31.05.2012
(51) Int. Cl.: B29C 53/60

(54) **Hohlwellenabschnitt für eine Antriebswelle aus einem Faserverbundwerkstoff**
Hollow shaft section for a drive shift made of a fibre compound material
Section d'arbre creux pour arbre d'entraînement composé d'une matière première composite en fibres

(30) Priorität: 01.06.2011 DE 102011050817
(43) Veröffentlichungstag der Anmeldung: 05.12.2012
(73) Patentinhaber: Technische Universität Darmstadt, 64289 Darmstadt (DE)
(72) Erfinder: Schürmann, Helmut, 67133 Maxdorf (DE); Dickhut, Tobias, 65428 Rüsselsheim (DE)
(74) Vertreter: Katscher Habermann Patentanwälte

(56) Entgegenhaltungen:
- WO-A1-2010/116883
- DE-A1- 3 804 901
- DE-A1-102009 009 682
- JP-A- 59 133 813
- US-A- 5 720 411
- US-A1- 2006 040 753
- Kleschinski, Michael: "Versagensmechanismen und faserverbundgerechte Gestaltung von Antriebswellen in Faserverbundbauweise" In: "Faser-Kunststoff-Verbunde: Neue Freiheitsgrade in der Konstruktion, Darmstadt, 3. - 4. März 2005 ; 11. Nationales Symposium SAMPE Deutschland e.V. / Society for the Advancement of Material and Process Engineering; Technische Universität Darmstadt, Fachg", 20. November 2008 (2008-11-20), XP009163154, * Seite 16, Spalte 2, Zeilen 19-21; Abbildungen 27,33 * * Seite 16, Absatz 2 - Seite 21, Absatz 3 *

## Beschreibung

Die Erfindung betrifft einen Hohlwellenabschnitt für eine Antriebswelle aus einem Faserverbundwerkstoff mit einem ersten Hohlwellenbereich, mit einem zweiten Hohlwellenbereich und mit einem zwischen dem ersten Hohlwellenbereich und dem zweiten Hohlwellenbereich angeordneten dritten Hohlwellenbereich, wobei der erste Hohlwellenbereich einen ersten Durchmesser, der zweite Hohlwellenbereich einen zweiten Durchmesser und der dritte Hohlwellenbereich einen von dem ersten Durchmesser und dem zweiten Durchmesser verschiedenen dritten Durchmesser aufweist.

Antriebswellen werden beispielsweise in Antriebssträngen von Kraftfahrzeugen zur Übertragung von Antriebsmomenten eingesetzt. Bei der Konstruktion der üblicherweise aus Stahl hergestellten Antriebswellen muss unter anderem berücksichtigt werden, wie eine bei einem Unfall von der Antriebswelle für die Insassen des Kraftfahrzeugs oder für Dritte ausgehende Gefahr verringert werden kann.

Zu diesem Zweck sind für Antriebswellen aus Stahl unterschiedliche Konstruktionsprinzipien bekannt. Beispielsweise ist es bekannt, eine Antriebswelle aus zwei Hohlwellenbereichen mit jeweils unterschiedlichen Durchmessern zu fertigen. Auf diese Weise wird bei einer belastungsbedingten Verformung der Antriebswelle, wie sie beispielsweise auf Grund eines Frontalzusammenstoßes zweier Fahrzeuge auftreten kann, ein Abschnitt der Antriebswelle mit größerem Durchmesser über einen Abschnitt der Antriebswelle mit dem kleinerem Durchmesser gestülpt. Dadurch wird eine Länge der Antriebswelle verkürzt, so dass ein Eindringen der Antriebswelle beispielsweise in die Fahrgastzelle vermieden werden kann. Da bei dem Überstülpen des Bereichs der Antriebswelle mit größerem Durchmesser über den Bereich der Antriebswelle mit kleinerem Durchmesser Verformungsarbeit aufgebracht werden muss, wird bei einer belastungsbedingten Verformung der Antriebswelle auch geringfügig Crash-Energie absorbiert.

Es ist auch bekannt, Antriebswellen aus einem Faserverbundwerkstoff wie beispielsweise einem Faserkunststoffverbund herzustellen, um unter anderem das Gewicht des Antriebsstrangs zu reduzieren. In WO 2010/116883 A1 wird ein Konzept beschrieben, im Hinblick auf eine angestrebte Gewichtseinsparung eine aus Stahl hergestellte Antriebswelle in einem Abschnitt dünnwandig auszugestalten und mit einem Faserverbundmaterial zu verstärken.

Antriebswellen, die teilweise oder vollständig aus einem geeigneten Faserverbundwerkstoff hergestellt sind, sind beispielsweise in US 2006/040753 A1 oder in JP 59 133813 A beschrieben.

An das Crash-Verhalten von Antriebswellen aus Faserverbundwerkstoffen sind prinzipiell die gleichen Anforderungen zu stellen wie an das Crash-Verhalten von Antriebswellen aus Stahl. Eine Möglichkeit, um ein bestimmtes Crash-Verhalten von Antriebswellen aus Faserverbundwerkstoffen vorzugeben, ist es, das von den Stahlantriebswellen bekannte Stülprohrkonzept auf Antriebswellen aus Faserverbundwerkstoffen zu übertragen. Ebenso wie bei Antriebswellen aus Stahl wird bei einer belastungsbedingten axialen Verformung der Antriebswelle aus Faserverbundwerkstoff der Bereich der Antriebswelle mit dem größeren Durchmesser über den Bereich der Antriebswelle mit dem kleineren Durchmesser gestülpt. Allerdings wird dabei ebenso wie bei Stahlantriebswellen nur geringfügig Crash-Energie absorbiert. Eine derartige Ausgestaltung einer Antriebswelle aus einem Faserverbundwerkstoff ist beispielsweise in DE 10 2009 009682 A1 beschrieben.

Die von der Antriebswelle bei einer belastungsbedingten Verformung nicht dissipierte Energie kann beispielsweise auf andere Komponenten des Fahrzeugs übertragen werden, die wiederum eine Gefahr für die Insassen des Fahrzeugs oder Dritte darstellen können.

Wenn die beiden Enden der Antriebswelle einen identisch übereinstimmenden ersten und zweiten Durchmesser aufweisen sollen, wie es in der Praxis oftmals gefordert wird, kann das Stülprohrkonzept nicht ohne weiteres übernommen werden.

In DE 38 04 901 A1 sind verschiedene Ausgestaltungen einer Antriebswelle beschrieben, die zur Vermeidung eines belastungsbedingten Torsionsknickens in einem Abschnitt verstärkt und dadurch versteift werden.

Aufgabe der Erfindung ist es daher Antriebswellen aus Faserverbundwerkstoffen so weiter zu entwickeln, dass eine von den Antriebswellen bei einem Unfall ausgehende Gefahr für Fahrzeuginsassen oder Dritte weiter verringert wird.

Diese Aufgabe wird erfindungsgemäß dadurch gelöst, dass zwischen dem ersten Hohlwellenbereich und dem dritten Hohlwellenbereich ein Versagensbereich angeordnet und so ausgestaltet ist, dass bei einer belastungsbedingten axialen Verformung des Hohlwellenabschnitts der Hohlwellenabschnitt bevorzugt in dem Versagensbereich birst, und dass an dem dritten Hohlwellenbereich ein erstes Energieaufnahmeelement angeordnet ist, das als energieabsorbierender Verformungskörper ausgebildet ist, sodass der energieabsorbierende Verformungskörper bei einer axial auf den Hohlwellenabschnitt einwirkenden Kraft und einem dadurch bedingten Eintauchen des ersten Hohlwellenbereichs in den dritten Hohlwellenbereich verformt wird und Verformungsenergie aufnimmt.. Bei einem Unfall wird ein Teil der axial auf die Antriebswelle wirkenden Kraft von dem Energieaufnahmeelement dissipiert. Um bei einem Eintauchen des ersten Hohlwellenbereichs in den dritten Hohlwellenbereich zusätzliche Crash-Energie dissipieren zu können ist vorgesehen, dass es sich bei dem ersten Energieaufnahmeelement um einen energieabsorbierenden Verformungskörper handelt. Bei dem Energieaufnahmeelement handelt es sich um einen speziellen Verformungskörper, der bei einem Crash durch die auf die Antriebswelle wirkende Kraft verformt wird. Die dabei von dem Verformungselement aufgenommene Verformungsenergie verringert folglich die bei einem Unfall auftretende Bewegungsenergie.

Die Position des energieaufnehmenden Hohlwellenabschnitts kann an die jeweiligen Anforderungen, die an die Antriebswelle und den vorhandenen Bauraum gestellt ist, angepasst werden. Es ist aber auch möglich, den Hohlwellenabschnitt an einem Rand der Antriebswelle anzuordnen, wodurch ein Absinken einer ersten biegekritischen Eigenfrequenz verringert werden kann.

Bei einer möglichen Ausgestaltung des Hohlwellenabschnitts ist vorgesehen, dass der erste Durchmesser und der zweite Durchmesser kleiner als der dritte Durchmesser sind. Bei einem Unfall und einer dadurch bedingten Verformung des Hohlwellenabschnitts wird auf diese Weise der dritte Hohlwellenabschnitt über den ersten Hohlwellenabschnitt und/oder den zweiten Hohlwellenabschnitt gestülpt.

Vorzugsweise ist vorgesehen, dass der erste Durchmesser und der zweite Durchmesser gleich sind. Auf diese Weise kann der Hohlwellenabschnitt einfach innerhalb einer Antriebswelle konstanten Durchmessers angeordnet werden.

Es ist aber auch möglich, dass sich der erste Durchmesser des ersten Hohlwellenbereichs und der zweite Durchmesser des zweiten Hohlwellenbereichs unterscheiden. Erfindungsgemäß unterscheidet sich der dritte Durchmesser des mittleren dritten Hohlwellenbereichs von dem jeweiligen Durchmesser des auf beiden Seiten angrenzenden ersten bzw. zweiten Hohlwellenbereichs. Der erste Durchmesser des ersten Hohlwellenbereichs muss nicht zwingend mit dem zweiten Durchmesser des gegenüberliegenden zweiten Hohlwellenbereichs übereinstimmen, so dass beispielsweise auch Anschlusselemente mit einem unterschiedlichen Durchmesser auf beiden Seiten des Hohlwellenabschnitts ohne zusätzliche Adapter oder Anpassungen mit den zugeordneten Endbereichen verbunden werden können.

Um bei einem Eintauchen des ersten Hohlwellenbereichs in den dritten Hohlwellenbereich weitere Bewegungsenergie zu dissipieren ist erfindungsgemäß vorgesehen, dass es sich bei dem ersten Energieaufnahmeelement um eine Verstärkungsfaserverbundschicht mit Fasern handelt, wobei die Fasern im Wesentlichen konzentrisch angeordnet sind und in Umfangsrichtung um eine Wellenlängsachse verlaufen. Durch den Einsatz einer solchen in Umfangsrichtung der Antriebswelle orientierten Wicklung in dem dritten Hohlwellenbereich wird ein Aufsprengen des dritten Hohlwellenbereichs bei dem Eintauchen des ersten Hohlwellenbereichs in den dritten Hohlwellenbereich erschwert. Bevor der erste Hohlwellenbereich in den dritten Hohlwellenbereich eintaucht, müssen die zusätzlichen Wicklungen zunächst zerstört werden. Dabei wird Bewegungsenergie dissipiert.

Durch die im Wesentlichen konzentrisch angeordneten und in Umfangsrichtung verlaufenden Fasern wird die für ein Aufsprengen der Verstärkungsfaserverbundschicht benötigte Energie im Vergleich zu einer Faserschicht erhöht, die in einer auf eine Momentenübertragung sowie im Hinblick auf eine erste biegekritische Eigenfrequenz ausgelegten Richtung gewickelt ist.

Es ist auch möglich, die durch die Verstärkungsfaserverbundschicht zusätzlich aufgenommene Energie durch Anpassung der Dicke und/oder des Wickelwinkels und/oder der Faserart der Faserschicht anzupassen, um ein gewünschtes Crashverhalten der Antriebswelle zu erreichen.

Der energieabsorbierende Verformungskörper kann beispielsweise auf einer Innenseite des dritten Hohlwellenbereichs, der einen größeren Durchmesser als der erste Hohlwellenbereich aufweist, angeordnet sein. Bei einem Eintauchen des ersten Hohlwellenbereichs in den dritten Hohlwellenbereich wirkt dadurch eine Kraft in axialer Richtung auf den energieabsorbierenden Körper. Durch die Einwirkung der Axialkraft auf den energieabsorbierenden Körper wird dieser verformt, wodurch weitere Crash-Energie dissipiert wird.

Durch eine entsprechende Wahl des Materials, aus dem der energieabsorbierende Körper hergestellt ist, kann die von dem energieabsorbierenden Körper bei einem Unfall aufgenommene Energie entsprechend der jeweiligen Anforderungen bei der Konstruktion der Antriebswelle vorgegeben werden.

Die bei einem Crash von dem Hohlwellenabschnitt dissipierte Energie kann dadurch weiter erhöht werden, dass ein zweites Energieaufnahmeelement an dem dritten Hohlwellenbereich angeordnet ist. Auf diese Weise können beispielsweise sowohl eine Verstärkungsfaserverbundschicht als auch ein energieabsorbierender Körper zur Aufnahme von Crash-Energie an dem dritten Hohlwellenbereich angeordnet werden. Dadurch können die Vorteile mehrerer und gegebenenfalls verschiedener Energieaufnahmeelemente in einem Hohlwellenabschnitt kombiniert werden.

Vorteilhafterweise ist weiter vorgesehen, dass das erste Energieaufnahmeelement auf einer Außenseite des dritten Hohlwellenbereichs angeordnet ist. Das zweite Energieaufnahmeelement kann dann beispielsweise an der Innenseite des dritten Hohlwellenbereichs angeordnet sein. Ist beispielsweise der dritte Durchmesser des dritten Hohlwellenbereichs größer als der erste Durchmesser des ersten oder der zweite Durchmesser des zweiten Hohlwellenbereichs, so kann die von dem Hohlwellenabschnitt aufgenommene Crash-Energie dadurch erhöht werden, dass auf einer Außenseite des dritten Hohlwellenbereichs die Verstärkungsfaserverbundschicht angeordnet ist und auf einer Innenseite des dritten Hohlwellenbereichs ein energieabsorbierender Körper angeordnet ist, der bei dem Eintauchen des ersten Hohlwellenbereichs in den dritten Hohlwellenbereich verformt wird.

Um die Reihenfolge des Versagens der verschiedenen Bereiche des Hohlwellenabschnitts bei der Konstruktion der Antriebswelle vorgeben zu können ist erfindungsgemäß vorgesehen, dass zwischen dem ersten Hohlwellenbereich und dem dritten Hohlwellenbereich ein Versagensbereich angeordnet und so ausgestaltet ist, dass bei einer belastungsbedingten axialen Verformung des Hohlwellenabschnitts der Hohlwellenabschnitt bevorzugt in dem Versagensbereich birst.

Dadurch, dass das Crash-Verhalten des Hohlwellenabschnitts und damit der Antriebswelle durch eine geeignete Konstruktion beeinflusst werden kann, ist es möglich, das Crash-Verhalten der sonstigen Fahrzeugkomponenten, die mit der Antriebswelle in Wirkverbindung stehen, auf das Crash-Verhalten der Antriebswelle abzustimmen oder das Crash-Verhalten der Antriebswelle auf die jeweiligen Bedingungen anzupassen, die durch die weiteren Fahrzeugkomponenten vorgegeben werden. Es kann der erste Hohlwellenbereich oder aber der zweite Hohlwellenbereich der Antriebsseite oder aber der Abtriebsseite des Antriebsstrangs zugeordnet sein. Um ein Bersten des Versagensbereichs bei einer belastungsbedingten Verformung der Antriebswelle weiter zu begünstigen ist vorteilhafterweise vorgesehen, dass ein Übergangsbereich zwischen dem zweiten Hohlwellenbereich und dem dritten Hohlwellenbereich angeordnet ist und der Übergangsbereich einen größeren Verformungswiderstand als der Versagensbereich aufweist.

Bei einer besonders vorteilhaften Ausgestaltung des Hohlwellenabschnitts ist vorgesehen, dass der Versagensbereich und der Übergangsbereich jeweils eine kontinuierliche, im Wesentlichen gleichförmige radiale Aufweitung aufweisen und eine Länge des Versagensbereichs kürzer als eine Länge des Übergangsbereichs ist.

Beispielsweise kann ein zwischen dem ersten Hohlwellenbereich mit einem kleineren Durchmesser und dem dritten Hohlwellenbereich mit einem größeren Durchmesser angeordneter Versagensbereich einen hyperbolischen Verlauf aufweisen. Da die Länge des Versagensbereichs kürzer als die Länge des Übergangsbereichs ist, ist eine Steigung, bzw. eine Veränderung des radialen Abstands des Versagensbereichs zumindest bereichsweise größer als eine Steigung des Übergangsbereichs. Bei einer axialen Belastung des Hohlwellenabschnitts entstehen daher in dem Versagensbereich höhere Spannungen als in dem Übergangsbereich, so dass der Versagensbereich bevorzugt verformt wird und gegebenenfalls birst.

Die für ein Aufsprengen des dritten Hohlwellenbereichs bei einem Eintauchen des ersten Hohlwellenbereichs in den dritten Hohlwellenbereich benötigte Energie kann dadurch weiter erhöht werden, dass in dem ersten Hohlwellenbereich und/oder dem zweiten Hohlwellenbereich ein Stützring angeordnet ist. Auf diese Weise birst bei einem Unfall zunächst der Versagensbereich und anschließend taucht beispielsweise der erste Hohlwellenbereich in den dritten Hohlwellenbereich ein, wobei der dritte Hohlwellenbereich durch den an dem ersten Hohlwellenbereich angeordneten Stützring nach und nach aufgeweitet wird und letztlich ebenfalls birst.

Die Herstellung von Antriebswellen aus Faserverbundwerkstoffen, deren Verlauf unterschiedliche Durchmesser aufweisen, ist äußerst aufwändig und kostenintensiv, da üblicherweise individuelle und an die jeweilige Formgebung der zu wickelnden Antriebswelle angepasste Wickelkerne hergestellt werden müssen.

Nachfolgend wird in Herstellungsverfahren zur Herstellung von erfindungsgemäßen Hohlwellenabschnitten beschrieben, mittels dessen die Hohlwellenabschnitte einfach und kostengünstig unter Verwendung herkömmlicher zylindrischer Wickeldorne hergestellt werden können.

An einem im Wesentlichen zylindrischen Wickeldorn wird mindestens ein energieabsorbierender Verformungskörper und/oder mindestens ein Formelement angeordnet, der Wickeldorn mit dem mindestens einen energieabsorbierenden Verformungskörper und/oder dem mindestens einen Formelement mit Hilfe einer Wickelvorrichtung mit einem Faserverbundwerkstoff umwickelt und der Wickeldorn nach Aushärten des Faserverbundwerkstoffs aus dem von dem Faserverbundwerkstoff und/oder dem energieabsorbierenden Verformungskörper gebildeten Hohlwellenabschnitt entfernt.

Auf diese Weise kann ein herkömmlicher Wickeldorn verwendet werden, der eine konstante Querschnittsfläche aufweist. Zudem ist es auf diese Weise möglich, einen bereits gewickelten Hohlwellenabschnitt in einer beliebigen Richtung von dem Wickeldorn abzuziehen, so dass mehrere Hohlwellenabschnitte auf einem einzigen Wickeldorn und gegebenenfalls in einem Wickelvorgang gewickelt werden können, was zu weiteren Kosteneinsparungen führt.

Zur Herstellung der Welle kann beispielsweise der energieabsorbierende Körper über einen herkömmlichen Wickelkern geschoben und in dem nachfolgenden Wickelvorgang mit eingewickelt werden. Nach einem Aushärten des Faserverbundwerkstoffs kann der Hohlwellenabschnitt beziehungsweise die gesamte Antriebswelle zusammen mit dem eingewickelten energieabsorbierenden Körper einfach von dem Wickelkern abgezogen werden.

Sollte kein energieabsorbierender Körper benötigt werden, so kann eine Form des Hohlwellenabschnitts einfach dadurch vorgegeben werden, dass an Stelle des energieabsorbierenden Körpers ein Formelement vorab auf den Wickelkern geschoben wird. Bei dem Formelement kann es sich beispielsweise um ein Element aus einem Elastomer oder ähnlichem handeln. Nach dem Abziehen der ausgehärteten Antriebswelle beziehungsweise des ausgehärteten Hohlwellenabschnitts von dem Wickelkern kann das Formelement einfach aus dem Hohlwellenabschnitt entfernt und für die Herstellung einer weiteren Antriebswelle beziehungsweise eines weiteren Hohlwellenabschnitts wiederverwendet werden.

Es ist daher vorgesehen, dass das Formelement aus dem Hohlwellenabschnitt entfernt wird.

Die Herstellungskosten des Hohlwellenabschnitts können dadurch weiter gesenkt werden, dass der dritte Hohlwellenbereich mit einem Faserverbundwerkstoff umwickelt wird, wobei Fasern des Faserverbundwerkstoffs im Wesentlichen konzentrisch um die Wellenlängsachse verlaufen.

Das erste Energieaufnahmeelement oder das zweite Energieaufnahmeelement können einfach auf dem dritten Hohlwellenabschnitt angeordnet und dort festgelegt, bzw. dort hergestellt werden. Bei dem ersten Energieaufnahmeelement kann es sich beispielsweise um einen energieabsorbierenden Körper und bei dem zweiten Energieaufnahmeelement um eine Verstärkungsfaserverbundschicht handeln. Es ist aber auch möglich, dass es sich bei dem ersten und dem zweiten Energieaufnahmeelement jeweils um einen energieabsorbierenden Körper oder eine Verstärkungsfaserverbundschicht handelt. Die zusätzlichen im Wesentlichen konzentrisch um die Wellenachse verlaufenden Fasern können während des Wickelvorgangs oder aber auch in einem sich an den ersten Wickelvorgang anschließenden weiteren Wickelvorgang auf den dritten Hohlwellenbereich aufgebracht werden.

Bei einer vorteilhaften Ausgestaltung des Verfahrens ist vorgesehen, dass ein Wickelwinkel bezüglich einer Wickeldornachse während eines Wickelvorgangs geändert wird. Dadurch kann eine Ausrichtung der Fasern des Faserverbundwerkstoffs beziehungsweise ein Wickelwinkel der Fasern für die verschiedenen Hohlwellenbereiche, den Versagensbereich und den Übergangsbereich entsprechend der jeweiligen Anforderung angepasst werden.

Der Herstellungsaufwand kann einfach dadurch weiter gesenkt werden, dass der Wickeldorn und/oder das Formelement zur Herstellung eines weiteren Hohlwellenabschnitts wieder verwendet werden.

Weitere vorteilhafte Ausgestaltungen des Erfindungsgedankens werden anhand von in der Zeichnung dargestellten und im Folgenden näher erläuternden Ausführungsbeispielen beschrieben.

Es zeigt:
Fig. 1 eine schematische Darstellung eines Hohlwellenabschnitts mit einer in einem dritten Hohlwellenbereich angeordneten Verstärkungsfaserverbundschicht,
Fig. 2 den in Fig. 1 schematisch dargestellten Hohlwellenabschnitt mit einem auf einer Innenseite des dritten Hohlwellenabschnitts angeordneten energieabsorbierenden Verformungskörper,
Fig. 3 den in Fig. 1 schematisch dargestellten Hohlwellenabschnitt mit einem in einem ersten Hohlwellenbereich angeordneten Stützring,
Fig. 4 den in Fig. 1 schematisch dargestellten Hohlwellenabschnitt mit einem in einem ersten Hohlwellenbereich angeordneten direkt aufgewickelten Stützring,
Fig. 5 den in Fig. 2 schematisch dargestellten Hohlwellenabschnitt mit einem in dem ersten Hohlwellenbereich angeordneten Stützring,
Fig. 6 den in Fig. 5 schematisch dargestellten Hohlwellenabschnitt mit einem in dem ersten Hohlwellenbereich angeordneten Krafteinleitungselement.

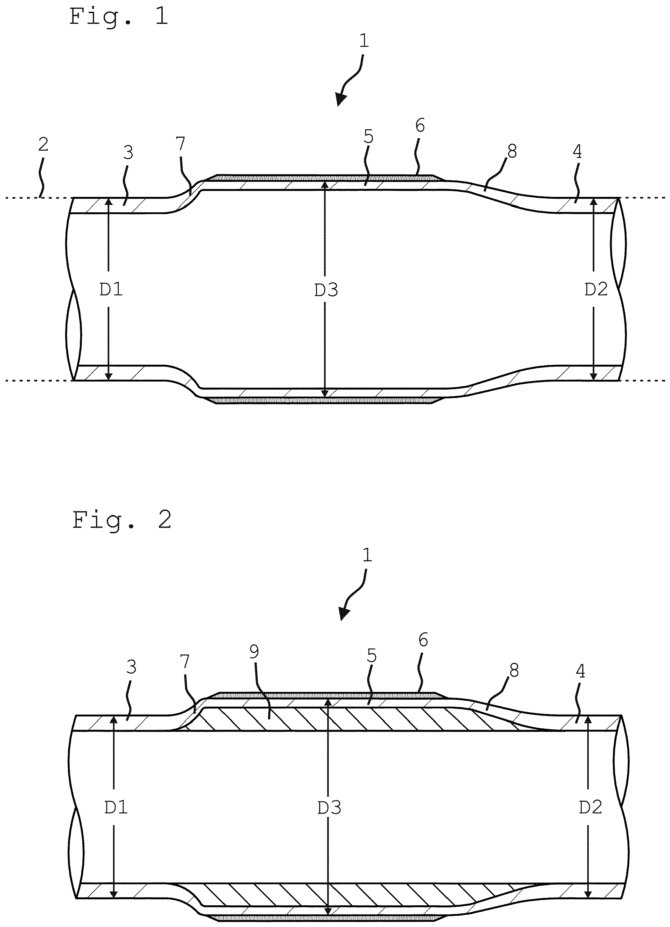

In Fig. 1 ist schematisch ein Hohlwellenabschnitt 1 dargestellt. Der Hohlwellenabschnitt 1 ist integraler Bestandteil einer nicht näher dargestellten Antriebswelle 2. Der Hohlwellenabschnitt 1 weist einen ersten Hohlwellenbereich 3 und einen zweiten Hohlwellenbereich 4 auf, wobei der erste Hohlwellenbereich 3 einen ersten Durchmesser D1 und der zweite Hohlwellenbereich 4 einen mit dem ersten Durchmesser D1 identisch übereinstimmenden zweiten Durchmesser D2 aufweist. Zwischen dem ersten Hohlwellenbereich 3 und dem zweiten Hohlwellenbereich 4 ist ein dritter Hohlwellenbereich 5 mit einem dritten Durchmesser D3 angeordnet, der größer als der erste Durchmesser D1 und der zweite Durchmesser D2 ist. An der Außenseite des dritten Hohlwellenbereichs 5 ist eine Verstärkungsfaserverbundschicht 6 aufgewickelt.

Zwischen dem ersten Hohlwellenbereich 3 und dem dritten Hohlwellenbereich 5 ist ein Versagensbereich 7 angeordnet, der ausgehend von dem ersten Hohlwellenbereich 3 eine kontinuierliche, im Wesentlichen gleichförmige radiale Aufweitung aufweist. Zwischen dem zweiten Hohlwellenbereich 4 und dem dritten Hohlwellenbereich 5 weist der Hohlwellenabschnitt 1 einen Übergangsbereich 8 auf, der wie der Versagensbereich 7 eine kontinuierliche, im Wesentlichen gleichförmige radiale Aufweitung aufweist. Eine Länge des Versagensbereichs 7 ist kürzer als eine Länge des Übergangsbereichs 8, so dass vorzugsweise der Versagensbereich 7 bei einer axialen Belastung des Hohlwellenabschnitts 1 verformt wird und birst.

Bei einem Unfall, der zu einer übermäßigen axialen Belastung der Antriebswelle 2 führt, birst zunächst der Versagensbereich 7. Anschließend schiebt sich der erste Hohlwellenbereich 3 in den dritten Hohlwellenbereich 5 und weitet diesen auf. Das Aufweiten des dritten Hohlwellenbereichs 5 wird durch die Verstärkungsfaserverbundschicht 6 durch die im Wesentlichen konzentrisch angeordneten und in Umfangsrichtung um die Wellenlängsachse verlaufenden Fasern erschwert, so dass zusätzliche Crash-Energie von dem Hohlwellenabschnitt 1 dissipiert wird. Durch eine entsprechende Anpassung des Verhältnisses der Durchmesser D1 und D2 kann ein Energieaufnahmeverhalten des Hohlwellenabschnitts 1 bereits bei der Konstruktion des Hohlwellenbereichs berücksichtigt werden.

Fig. 2 zeigt eine schematische Darstellung des in Fig. 1 dargestellten Hohlwellenabschnitts 1, der in dieser Darstellung als separates Bauteil dargestellt ist. Neben der Verstärkungsfaserverbundschicht 6 weist der in Fig. 2 dargestellte Hohlwellenabschnitt 1 ein zweites Energieaufnahmeelement in Form eines auf einer Innenseite des dritten Hohlwellenbereichs 5 angeordneten energieabsorbierenden Körpers 9 auf.

Wird bei einem Unfall eine Kraft in axialer Richtung auf den Hohlwellenabschnitt 1 ausgeübt, so birst zunächst der Versagensbereich 7 und anschließend wird der erste Hohlwellenbereich 3 durch die in axialer Richtung eingeleiteten Kräfte in den dritten Hohlwellenbereich 5 verlagert. Dabei wird neben der durch die Aufweitung der Verstärkungsfaserverbundschicht 6 dissipierten Energie zusätzlich Crash-Energie durch die Verformung des energieabsorbierenden Körpers 9 aufgenommen.

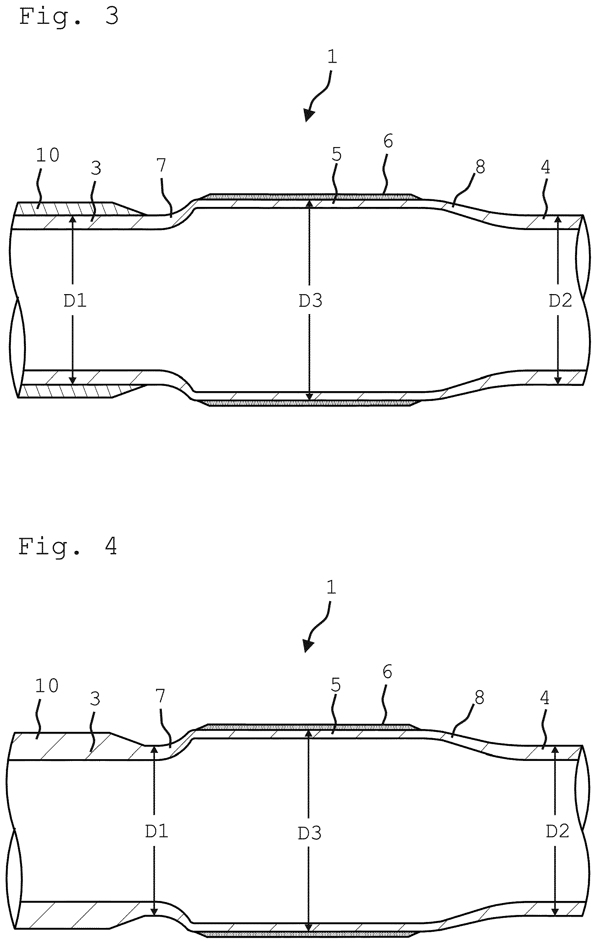

Fig. 3 zeigt eine schematische Darstellung des in Fig. 1 dargestellten Hohlwellenabschnitts 1 mit einem an einer Außenseite des ersten Hohlwellenbereichs 3 angeordneten Stützrings 10. Der Stützring 10 kann beispielsweise aus Metall oder einem anderen geeigneten Werkstoff hergestellt sein und durch Pressen oder Schrumpfen mit dem ersten Hohlwellenbereich 3 verbunden worden sein.

Nach dem Bersten des Versagensbereichs 7 durch eine belastungsbedingte axiale Verformung des Hohlwellenabschnitts 1 wird der dritte Hohlwellenbereich 5 mit der auf dem dritten Hohlwellenbereich 5 angewickelten Verstärkungsfaserverbundschicht 6 durch das Eindringen des ersten Hohlwellenbereichs 3 mit dem an dem ersten Hohlwellenbereich 3 angeordneten Stützring 10 aufgeweitet. Der Stützring 10 ist dabei so dimensioniert, dass der dritte Hohlwellenbereich 5 bei einem Eindringen des ersten Hohlwellenbereichs 3 zunächst kontinuierlich aufgeweitet wird und schließlich birst. Durch eine entsprechende Anpassung der Formgebung des Stützrings 10 kann ein Energieaufnahmeverhalten des Hohlwellenabschnitts 1 bereits bei der Konstruktion des Hohlwellenabschnitts 1 berücksichtigt werden.

In Fig. 4 ist schematisch der in Fig. 1 dargestellte Hohlwellenabschnitt 1 mit einem direkt an den ersten Hohlwellenabschnitt 3 aufgewickelten Stützring 10 dargestellt. Der Stützring 10 kann in einem Wickelvorgang zusammen mit dem Hohlwellenabschnitt 1 und der Verstärkungsfaserverbundschicht 6 hergestellt werden, wodurch der Herstellungsaufwand und die Herstellungskosten gesenkt werden können.

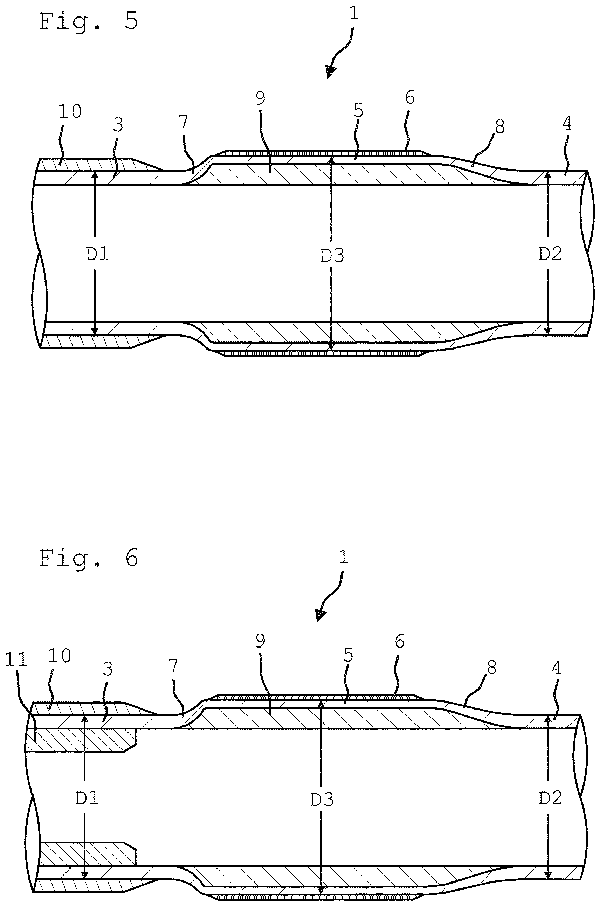

Fig. 5 zeigt einen Hohlwellenabschnitt 1 mit einem in dem ersten Hohlwellenbereich 3 angeordneten Stützring 10, einer an der Außenseite des dritten Hohlwellenbereichs 5 angeordneten Verstärkungsfaserverbundschicht 6 und einem an der Innenseite des dritten Hohlwellenbereichs 5 angeordneten energieabsorbierenden Körpers 9. Durch eine Kombination der verschiedenen Energieaufnahmeelemente und des Stützrings 10 wird durch einen solchen Hohlwellenabschnitt 1 bei einem Unfall besonders viel Crash-Energie absorbiert.

In Fig. 6 ist schematisch der in Fig. 5 dargestellte Hohlwellenabschnitt 1 mit einem in dem ersten Hohlwellenbereich 3 angeordneten Krafteinleitungselement 11 dargestellt. Mit Hilfe des Krafteinleitungselements 11 kann der Hohlwellenabschnitt 1 drehfest und biegesteif mit einer weiteren Komponente der Antriebswelle 2 bzw. des Antriebsstrangs wie beispielsweise einem Getriebe verbunden werden. Dabei wird ein Drehmoment über das Krafteinleitungselement 11 auf den Hohlwellenabschnitt 1 übertragen.

## Patentansprüche

1. Hohlwellenabschnitt (1) für eine Antriebswelle (2) aus einem Faserverbundwerkstoff mit einem ersten Hohlwellenbereich (3), mit einem zweiten Hohlwellenbereich (4) und mit einem zwischen dem ersten Hohlwellenbereich (3) und dem zweiten Hohlwellenbereich (4) angeordneten dritten Hohlwellenbereich (5), wobei der erste Hohlwellenbereich (3) einen ersten Durchmesser, der zweite Hohlwellenbereich (4) einen zweiten Durchmesser und der dritte Hohlwellenbereich (5) einen von dem ersten Durchmesser und dem zweiten Durchmesser verschiedenen dritten Durchmesser aufweist, **dadurch gekennzeichnet, dass** zwischen dem ersten Hohlwellenbereich (3) und dem dritten Hohlwellenbereich (5) ein Versagensbereich (7) angeordnet und so ausgestaltet ist, dass bei einer belastungsbedingten axialen Verformung des Hohlwellenabschnitts (1) der Hohlwellenabschnitt (1) in dem Versagensbereich (7) birst, und dass an dem dritten Hohlwellenbereich (5) ein erstes Energieaufnahmeelement angeordnet ist, das als energieabsorbierender Verformungskörper (9) ausgebildet ist, sodass der energieabsorbierende Verformungskörper (9) bei einer axial auf den Hohlwellenabschnitt (1) einwirkenden Kraft und einem dadurch bedingten Eintauchen des ersten Hohlwellenbereichs (3) in den dritten Hohlwellenbereich (5) verformt wird und Verformungsenergie aufnimmt.

2. Hohlwellenabschnitt (1) gemäß Anspruch 1, **dadurch gekennzeichnet, dass** es sich bei dem ersten Energieaufnahmeelement um eine Verstärkungsfaserverbundschicht (6) mit Fasern, vorzugsweise mit hochfesten Verstärkungsfasern handelt, wobei die Fasern im Wesentlichen konzentrisch angeordnet sind und in Umfangsrichtung um eine Wellenlängsachse verlaufen.

3. Hohlwellenabschnitt (1) gemäß einem der voranstehenden Ansprüche, **dadurch gekennzeichnet, dass** ein zweites Energieaufnahmeelement an dem dritten Hohlwellenbereich (5) angeordnet ist.

4. Hohlwellenabschnitt (1) gemäß einem der voranstehenden Ansprüche, **dadurch gekennzeichnet, dass** das erste Energieaufnahmeelement auf einer Außenseite des dritten Hohlwellenbereichs (5) angeordnet ist.

5. Hohlwellenabschnitt (1) gemäß einem der voranstehenden Ansprüche, **dadurch gekennzeichnet, dass** ein Übergangsbereich (8) zwischen dem zweiten Hohlwellenbereich (4) und dem dritten Hohlwellenbereich (5) angeordnet ist und der Übergangsbereich (8) einen größeren Verformungswiderstand als der Versagensbereich (7) aufweist.

6. Hohlwellenabschnitt (1) gemäß Anspruch 5, **dadurch gekennzeichnet, dass** der Versagensbereich (7) und der Übergangsbereich (8) jeweils eine kontinuierliche, im Wesentlichen gleichförmige radiale Aufweitung aufweisen und eine Länge des Versagensbereichs (7) kürzer als eine Länge des Übergangsbereichs (8) ist.

7. Hohlwellenabschnitt (1) gemäß einem der voranstehenden Ansprüche, **dadurch gekennzeichnet, dass** in dem ersten Hohlwellenbereich (3) und/oder dem zweiten Hohlwellenbereich (4) ein Stützring (10) angeordnet ist.

## Claims

1. Hollow shaft section (1) for a drive shaft (2) made of a fiber compound material, having a first hollow shaft region (3), a second hollow shaft region (4) and a third hollow shaft region (5) arranged between the first hollow shaft region (3) and the second hollow shaft region (4), wherein the first hollow shaft region (3) has a first diameter, the second hollow shaft region (4) has second diameter and the third hollow shaft region (5) has a third diameter different from the first diameter and the second diameter, **characterized in that** a failure region (7) is arranged between the first hollow shaft region (3) and the third hollow shaft region (5) and configured in such a way that the hollow shaft section (1) bursts in the failure region (7) upon axial deformation of the hollow shaft section (1) caused by stress, and **in that** a first energy receiving element designed, which is formed as energy-absorbing deformation body (9), is arranged on the third hollow shaft region (5) so that the energy-absorbing deformation body (9) is deformed when a force is axially applied on the hollow shaft section (1) and the first hollow shaft region (3) enters the third hollow shaft region (5), and receives deformation energy.

2. Hollow shaft section (1) according to claim 1, **characterized in that** the first energy receiving element is a reinforcing fiber compound layer (6) with fibers, preferably with high-tensile fibers, wherein the fibers are arranged substantially concentrically and run around a longitudinal shaft axis in the circumferential direction.

3. Hollow shaft section (1) according to one of the preceding claims, **characterized in that** a second energy receiving element is arranged on the third hollow shaft region (5).

4. Hollow shaft section (1) according to one of the preceding claims, **characterized in that** the first energy receiving element is arranged on an outer side of the third hollow shaft region (5).

5. Hollow shaft section (1) according to one of the preceding claims, **characterized in that** a transition region (8) is arranged between the second hollow shaft region (4) and the third hollow shaft region (5), and **in that** the transition region (8) has a greater deformation resistance than the failure region (7).

6. Hollow shaft section (1) according to claim 5, **characterized in that** the failure region (7) and the transition region (8) each have a continuous, substantially uniform radial expansion, and a length of the failure region (7) is shorter than a length of the transition region (8).

7. Hollow shaft section (1) according to one of the preceding claims, **characterized in that** a support ring (10) is arranged in the first hollow shaft region (3) and/or the second hollow shaft region (4).

## Revendications

1. Segment d'arbre creux (1) pour un arbre d'entraînement (2) constitué d'une matière composite en fibres, comprenant une première partie d'arbre creux (3), une deuxième partie d'arbre creux (4) et comprenant une troisième partie d'arbre creux (5) disposée entre la première partie d'arbre creux (3) et la deuxième partie d'arbre creux (4), la première partie d'arbre creux (3) présentant un premier diamètre, la deuxième partie d'arbre creux (4) présentant un deuxième diamètre et la troisième partie d'arbre creux (5) présentant un troisième diamètre différent du premier diamètre et du deuxième diamètre, **caractérisé en ce qu'**entre la première partie d'arbre creux (3) et la troisième partie d'arbre creux (5), une zone de défaillance (7) est disposée et conçue de manière à ce que lors d'une déformation axiale du segment d'arbre creux (1), due à une charge, le segment d'arbre creux (1) éclate dans la zone de défaillance (7), et **en ce que** sur la troisième partie d'arbre creux (5) est disposé un premier élément d'absorption d'énergie qui est réalisé en tant que corps de déformation (9) absorbant l'énergie, de sorte que le corps de déformation (9) absorbant l'énergie, lors d'une force agissant axialement sur le segment d'arbre creux (1) et d'un enfoncement, dû à cette force, de la première partie d'arbre creux (3) dans la troisième partie d'arbre creux (5), est déformé et absorbe l'énergie de déformation.

2. Segment d'arbre creux (1) selon la revendication 1, **caractérisé en ce que** le premier élément d'absorption d'énergie est une couche composite de fibres de renforcement (6) comprenant des fibres, de préférence des fibres de renforcement hautement résistantes, les fibres étant essentiellement disposées de manière concentrique et s'étendant autour d'un axe longitudinal d'arbre dans le sens circonférentiel.

3. Segment d'arbre creux (1) selon l'une quelconque des revendications précédentes, **caractérisé en ce qu'**un deuxième élément d'absorption d'énergie est disposé sur la troisième partie d'arbre creux (5).

4. Segment d'arbre creux (1) selon l'une quelconque des revendications précédentes, **caractérisé en ce que** le premier élément d'absorption d'énergie est disposé sur un côté extérieur de la troisième partie d'arbre creux (5).

5. Segment d'arbre creux (1) selon l'une quelconque des revendications précédentes, **caractérisé en ce qu'**une zone de transition (8) est disposée entre la deuxième partie d'arbre creux (4) et la troisième partie d'arbre creux (5) et **en ce que** la zone de transition (8) présente une résistance de déformation plus grande que la zone de défaillance (7).

6. Segment d'arbre creux (1) selon la revendication 5, **caractérisé en ce que** la zone de défaillance (7) et la zone de transition (8) présentent respectivement un élargissement radial continu, essentiellement uniforme, et une longueur de la zone de défaillance (7) plus courte qu'une longueur de la zone de transition (8).

7. Segment d'arbre creux (1) selon l'une quelconque des revendications précédentes, **caractérisé en ce qu'**un anneau de support (10) est disposé dans la première partie d'arbre creux (3) et/ou dans la deuxième partie d'arbre creux (4).
